# FASCICULE DE BREVET EUROPEEN

(11) **EP 3 083 384 B1**
(45) Date de publication et mention de la délivrance du brevet: **25.07.2018**
(21) Numéro de dépôt: 14808671.3
(22) Date de dépôt: 08.12.2014
(51) Int. Cl.: B62K 3/00, B62M 6/45, B62M 6/65

(54) **TROTTINETTE MOTORISEE**
MOTORISIERTER ROLLER
MOTORIZED SCOOTER

(30) Priorité: 18.12.2013 FR 1362934
(43) Date de publication de la demande: 26.10.2016
(73) Titulaire: Decathlon, 59650 Villeneuve d'Ascq (FR)
(72) Inventeur: LAGANT, Florent, F-59100 Roubaix (FR); GUERY, Mathieu, F-59000 Lille (FR)
(74) Mandataire: Balesta, Pierre
(86) Numéro de dépôt international: PCT/EP2014/076931
(87) Numéro de publication internationale: WO 2015/091074

(56) Documents cités:
- WO-A1-2012/163789
- DE-A1- 10 053 043

## Description

### Arrière-plan de l'invention

La présente invention a pour objet une trottinette motorisée. Elle trouve en particulier une application pour la pratique de loisirs de plein-air ou pour des déplacements de moyennes ou longues distances, en particulier en milieu urbain, par exemple dans le cadre de l'intermodalité.

Par intermodalité, on comprend la combinaison de différents modes de transport, tels que la marche, la bicyclette, la trottinette, le métro, le bus, ... utilisée sur un unique parcours.

On connaît des trottinettes motorisées dont la puissance du moteur est commandée par un organe de commande actionné par l'utilisateur.

Une telle trottinette est en particulier proposée par le document US 2002/170 763, qui décrit une trottinette comportant un cadre, une roue avant et une roue arrière fixées au cadre, un moteur configuré pour entraîner en rotation la roue arrière, et un organe de commande du moteur.

En actionnant l'organe de commande, l'utilisateur choisit l'une des puissances prédéterminées du moteur, et, par suite, la vitesse de la trottinette.

On connaît également des trottinettes motorisées dont l'organe de commande comporte une gâchette disposée, par exemple, sur le guidon de la trottinette.

En actionnant la gâchette, par exemple en la pivotant autour de l'axe du guidon, l'utilisateur modifie la puissance du moteur, de manière similaire à l'actionnement de l'organe de commande d'un cyclomoteur.

Néanmoins, de tels produits ne satisfont pas les utilisateurs qui souhaitent bénéficier d'une assistance permettant de réduire l'effort musculaire afin, par exemple, de parcourir des distances plus longues qu'avec une trottinette habituelle, tout en conservant la possibilité de pratiquer la trottinette de manière traditionnelle, c'est-à-dire, par exemple, en maintenant un pied sur le cadre de la trottinette, alors que l'autre pied applique des impulsions sur le sol. En outre, de tels produits ne permettent pas d'adapter de manière automatique la puissance du moteur aux efforts exercés par l'utilisateur. Une trottinette motorisée selon le préambule de la revendication 1 est connue du document WO 2012/163789 A1.

### Objet et résumé de l'invention

La présente invention a pour but de résoudre, parmi d'autres, les insuffisances décrites plus haut des trottinettes motorisées existantes, en proposant une trottinette motorisée dont la puissance du moteur est commandée par les efforts exercés par l'utilisateur.

Ce but est atteint par le fait que l'invention porte sur une trottinette dont l'organe de commande comporte :
- des moyens de détection d'accélération pour détecter une phase d'accélération de la trottinette ;
- des moyens de détection de décélération pour détecter une phase de décélération de la trottinette ;
- l'organe de commande étant configuré pour actionner le moteur lorsqu'une phase de décélération ayant une durée au moins égale à un premier seuil prédéterminé a été détectée par les moyens de détection de décélération après qu'une phase d'accélération a été détectée par les moyens de détection d'accélération.

Ainsi, ce dispositif est configuré de manière que le moteur est actionné en fonction des efforts exercés par l'utilisateur.

Par accélération et décélération de la trottinette, on comprend une phase au cours de laquelle, respectivement, la vitesse de la trottinette augmente et diminue.

Plus particulièrement, l'organe de commande est configuré pour actionner le moteur après qu'un effort musculaire a été exercé par l'utilisateur.

Par effort musculaire, on comprend, par exemple et de manière non limitative, une impulsion donnée par l'utilisateur à la trottinette permettant de mettre ou de maintenir la trottinette en mouvement, l'utilisateur appliquant, par l'une de ses jambes, une pression sur le sol, alors que l'autre jambe est maintenue sur la cadre de la trottinette, et plus particulièrement sur la plateforme disposée entre les roues avant et arrière.

Le fait de conditionner l'actionnement du moteur à une détection d'une phase de décélération suivant la détection d'une phase d'accélération permet de ne pas actionner le moteur si l'utilisateur exerce une impulsion sur la trottinette, ce qui risquerait, entre autres, de perturber l'utilisation traditionnelle et manuelle de la trottinette par l'utilisateur.

L'organe de commande peut donc être désactivé de sorte que la trottinette motorisée selon la présente invention ne supprime pas la possibilité pour l'utilisateur de mettre ou de maintenir en mouvement la trottinette au moyen des efforts musculaires traditionnels.

Par ailleurs, le fait de conditionner l'actionnement du moteur à une détection d'une phase de décélération suffisamment longue permet de ne pas actionner le moteur lorsque l'utilisateur exerce une nouvelle impulsion, de manière sensiblement immédiate après l'accélération détectée par les moyens de détection d'accélération.

En d'autres termes, l'organe de commande est configuré de manière que, lorsque l'utilisateur exerce différentes impulsions consécutives de manière rapprochée, par exemple pour initier le mouvement de la trottinette après son immobilisation, le moteur n'est pas actionné, de manière à ne pas perturber les efforts exercés par l'utilisateur.

Par impulsions successives rapprochées, on comprend des impulsions qui sont exercées par l'utilisateur sans qu'une durée supérieure au premier seuil prédéterminée ne s'écoule entre la fin de la phase d'accélération détectée par les moyens de détection d'accélération à l'issue d'une première impulsion, et le début de la phase d'accélération, également détectée par les moyens de détection d'accélération, à l'issue de l'impulsion suivante. Dit autrement, deux impulsions successives doivent avoir lieu dans un délai inférieur au premier seuil prédéterminé.

Par fin de la phase d'accélération, on comprend le moment qui précède le moment où la vitesse de la trottinette commence à décroître, par exemple du fait des frottements de la trottinette sur la route sur laquelle elle évolue.

Lorsque l'utilisateur n'exerce plus de nouvelle impulsion sur la trottinette, la trottinette décrit une phase de décélération détectée par les moyens de détection de décélération ; lorsque les moyens de détection de décélération détectent une phase de décélération dont la durée est supérieure au premier seuil prédéterminé, le moteur est actionné, de manière à supprimer la décélération de la trottinette.

En d'autres termes, l'organe de commande du moteur est configuré pour actionner le moteur de manière à suppléer les efforts musculaires exercés par l'utilisateur.

L'invention est déclinée ci-après dans une série de variantes de réalisation, qui peuvent être considérées seules ou en combinaison avec une ou plusieurs des précédentes.

Avantageusement, l'organe de commande est configuré pour actionner le moteur après détection de ladite phase de décélération de sorte que la vitesse de la trottinette soit maintenue à une vitesse de consigne.

Par cette disposition, l'organe de commande est configuré de manière que le moteur est actionné pour supprimer la décélération naturelle de la trottinette inhérente, par exemple, aux forces de frottement.

De manière avantageuse, la vitesse de consigne est fonction de la vitesse de déclenchement. Par vitesse de déclenchement, on comprend la vitesse de la trottinette au moment de l'actionnement du moteur.

La vitesse de déclenchement peut donc correspondre à la vitesse de la trottinette à la fin de la durée de la phase de décélération détectée par les moyens de décélération ; alternativement, elle peut correspondre à une vitesse inférieure à la vitesse de la trottinette à la fin de la durée de la phase de décélération détectée par les moyens de décélération, dans l'hypothèse où le moteur n'est pas actionné de manière simultanée à la fin de la durée de la phase de décélération détectée, mais de manière légèrement postérieure, la vitesse de la trottinette continuant, dans cette hypothèse, à diminuer.

Ainsi, l'organe de commande est configuré de manière que l'assistance de la trottinette est fonction des efforts exercés par l'utilisateur qui ont permis d'atteindre la vitesse de déclenchement. On comprend donc que l'organe de commande est configuré de manière que l'assistance générée par l'actionnement du moteur est exercée de manière à ne pas surprendre l'utilisateur, par une puissance du moteur qui serait indépendante de la vitesse de la trottinette détectée à l'issue de la phase de décélération détectée par les moyens de détection de décélération dont la durée dépasse le premier seuil prédéterminé.

De préférence, la vitesse de consigne est égale à la vitesse de la trottinette au moment de l'actionnement du moteur.

Par cette disposition, l'assistance générée par l'actionnement du moteur est particulièrement fluide, et n'entraîne aucune accélération ou décélération soudaine et brusque, de nature à surprendre l'utilisateur, voire à le déstabiliser.

Avantageusement, l'organe de commande est configuré pour déterminer une vitesse en fin de ladite phase de décélération, et pour actionner le moteur après détection de ladite phase de décélération de sorte que la vitesse de la trottinette soit supérieure à la vitesse déterminée en fin de ladite phase de décélération.

Par cette disposition, l'assistance fournie par l'actionnement du moteur permet de réduire, voire de supprimer, les effets de la décélération pendant la durée sensiblement égale au premier seuil prédéterminé de la phase de décélération détectée par les moyens de détection de décélération. En d'autres termes, l'organe de commande est configuré de manière à actionner le moteur pour que la vitesse de la trottinette motorisée se rapproche de la vitesse cible que l'utilisateur souhaite faire prendre à la trottinette, à l'issue de la/des impulsion(s) qu'il a exercée(s).

De manière avantageuse, l'organe de commande est configuré pour actionner le moteur pendant une durée prédéterminée.

Par cette disposition, le moteur n'est pas actionné de manière continue, permettant ainsi d'alterner les phases de propulsion manuelle, au moyen par exemple d'impulsions exercées de manière traditionnelle par l'utilisateur, et les phases de propulsion assistée, par l'actionnement du moteur. En outre, par cette disposition, la capacité d'assistance de la trottinette, qui combine ainsi différents modes de propulsion, est accrue.

De préférence, l'organe de commande est configuré pour stopper l'actionnement du moteur lorsqu'une nouvelle phase d'accélération est détectée alors que le moteur est actionné.

Par cette disposition, l'utilisation de manière traditionnelle de la trottinette, au moyen d'impulsions exercées par l'utilisateur, n'est pas empêchée par l'actionnement du moteur.

Avantageusement, l'organe de commande est configuré pour actionner à nouveau le moteur lorsqu'une nouvelle phase de décélération ayant une durée au moins égale au premier seuil prédéterminé a été détectée par les moyens de détection de décélération après la nouvelle phase d'accélération.

Ainsi, les phases d'assistance par l'actionnement du moteur et de propulsion manuelle par les impulsions exercées par l'utilisateur peuvent s'enchaîner de manière fluide et intuitive, permettant ainsi d'allier les avantages d'une assistance motorisée à la pratique sportive inhérente au déplacement en trottinette. L'utilisateur peut donc décider d'augmenter la vitesse de consigne en donnant une nouvelle impulsion.

De manière avantageuse, la trottinette comporte en outre un dispositif de détermination de la vitesse de la trottinette, et l'organe de commande est configuré pour stopper l'actionnement du moteur lorsqu'une variation positive de la vitesse de la trottinette supérieure à un deuxième seuil prédéterminé est détectée.

Ainsi, lorsque la vitesse de la trottinette dépasse la vitesse de consigne de la trottinette de plus du deuxième seuil prédéterminé, ou, en d'autres termes, lorsque la vitesse de la trottinette augmente de plus du deuxième seuil prédéterminé par rapport à la vitesse de consigne, l'actionnement du moteur est interrompu. Par cette disposition, la sécurité de l'utilisateur ainsi que celle des personnes évoluant à proximité de la trottinette ne sont pas compromises par le dispositif selon la présente invention, l'assistance motorisée ne venant pas s'ajouter aux effets de cette augmentation de la vitesse qui peut être due, par exemple et de manière non limitative, à une pente descendante de la route sur laquelle la trottinette est déplacée, à une nouvelle impulsion exercée par l'utilisateur,...

De préférence, l'organe de commande est configuré pour stopper l'actionnement du moteur lorsque la variation positive de la vitesse de la trottinette est supérieure au deuxième seuil prédéterminé pendant une durée supérieure à un troisième seuil prédéterminé.

Par cette disposition, l'actionnement du moteur n'est pas stoppé par une accélération supérieure au deuxième seuil prédéterminé pendant une durée inférieure au troisième seuil prédéterminé. En d'autres termes, l'assistance de la trottinette n'est pas stoppée par une accélération brusque mais brève, une telle accélération accidentelle pouvant se produire, par exemple, du fait d'aspérités de la route ou d'un contact avec la bordure d'un trottoir.

Par accélération accidentelle, on comprend toute accélération distincte d'une accélération causée de manière volontaire par une impulsion donnée par l'utilisateur à la trottinette.

Avantageusement, l'organe de commande est configuré de manière à ne pas actionner le moteur lorsque la vitesse de la trottinette est supérieure à un quatrième seuil prédéterminé.

En d'autres termes, la vitesse maximale atteignable par la motorisation est inférieure au quatrième seuil prédéterminé.

Par cette disposition, la trottinette ne peut pas être maintenue, par l'actionnement du moteur, à une vitesse supérieure au quatrième seuil prédéterminé, de manière à ne pas compromettre la sécurité de l'utilisateur et des autres usagers de l'espace sur lequel la trottinette évolue. Cette disposition permet en particulier de se conformer aux usages attendus sur l'espace public, par exemple lorsque la trottinette évolue sur un trottoir.

De manière avantageuse, l'organe de commande est configuré de manière à ne pas actionner le moteur lorsque la vitesse de la trottinette est inférieure à un cinquième seuil prédéterminé.

Par cette disposition, le moteur n'est pas actionné de manière intempestive, par exemple lorsque l'utilisateur marche à côté de la trottinette.

De préférence, la trottinette comporte en outre un dispositif de freinage, et l'organe de commande est configuré pour stopper l'actionnement du moteur lorsque le dispositif de freinage est actionné.

Ainsi, de manière simple et intuitive, l'actionnement du moteur est stoppé, pour permettre à l'utilisateur de réduire de manière efficace et rapide la vitesse de la trottinette et ainsi de s'adapter aux contraintes rencontrées.

### Brève description des dessins

D'autres caractéristiques et avantages de l'invention apparaîtront plus clairement et de manière complète à la lecture de la description ci-après d'un mode de réalisation préféré, donné à titre d'exemple non limitatif et en référence aux dessins annexés suivants sur lesquels :
- les figures **1A** et **1B** représentent schématiquement un exemple de trottinette selon la présente invention ; et
- les figures **2A****,** **2B** et **2C** représentent schématiquement différents exemples d'évolutions temporelles de la vitesse de la trottinette selon la présente invention.

### Description détaillée de l'invention

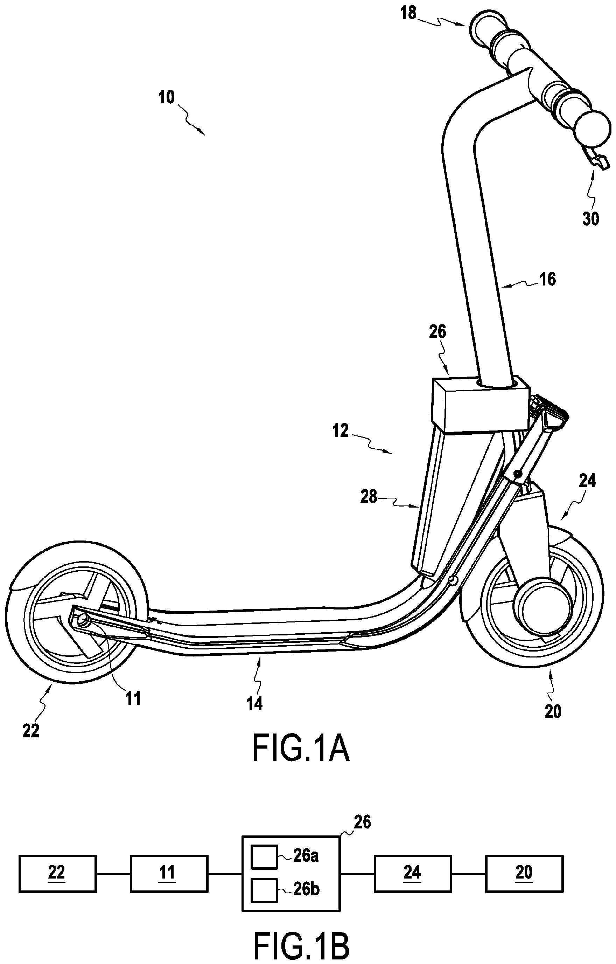

Dans l'exemple représenté aux figures **1A** et **1B****,** la trottinette **10** selon l'invention comporte, de manière traditionnelle, un cadre **12,** une roue avant **20** et une roue arrière **22.**

Le cadre **12** de la trottinette **10** comporte une plateforme **14** disposée entre les roues avant **20** et arrière **22,** et une colonne de direction **16** dont une extrémité est fixée à la roue avant **20,** la colonne de direction **16** comportant un guidon **18** à son extrémité opposée.

En outre, la trottinette **10** selon la présente invention comporte un moteur **24** configuré pour entraîner en rotation la roue avant **20** et un organe de commande **26** configuré pour commander le moteur **24.**

Par exemple, et de manière non limitative, le moteur **24** de la trottinette **10** est un moteur électrique monté sur le moyeu de la roue avant **20,** la trottinette **10** comportant en outre une batterie **28** disposée entre la colonne de direction **16** et la plateforme **14.**

On pourrait bien évidemment concevoir, et sans sortir du cadre de la présente invention, tout autre type de moteur, tel qu'un moteur à combustion, configuré pour entraîner en rotation l'une ou l'autre des roues avant **20** et arrière **22.**

La trottinette **10** comporte par ailleurs un dispositif de freinage **30,** qui peut être actionné, par exemple et de manière non limitative, depuis le guidon **18** de la trottinette **10,** le dispositif de freinage étant configuré pour s'opposer à la rotation de la roue avant **20.**

La trottinette **10** comporte aussi un dispositif de détermination de la vitesse de la trottinette ; par exemple et de manière non limitative, le dispositif de détermination de la vitesse est un capteur **11** monté sur la roue arrière **22** et configuré pour acquérir, à des intervalles réguliers séparés d'une période **t0**, la vitesse de la trottinette **10.** Il peut aussi s'agir d'un capteur de vitesse de rotation de l'une des deux roues de la trottinette.

Par ailleurs, l'organe de commande **26** comporte en particulier des moyens de détection d'accélération **26a** et des moyens de détection de décélération **26b,** configurés pour détecter respectivement une phase d'accélération et une phase de décélération de la trottinette **10.**

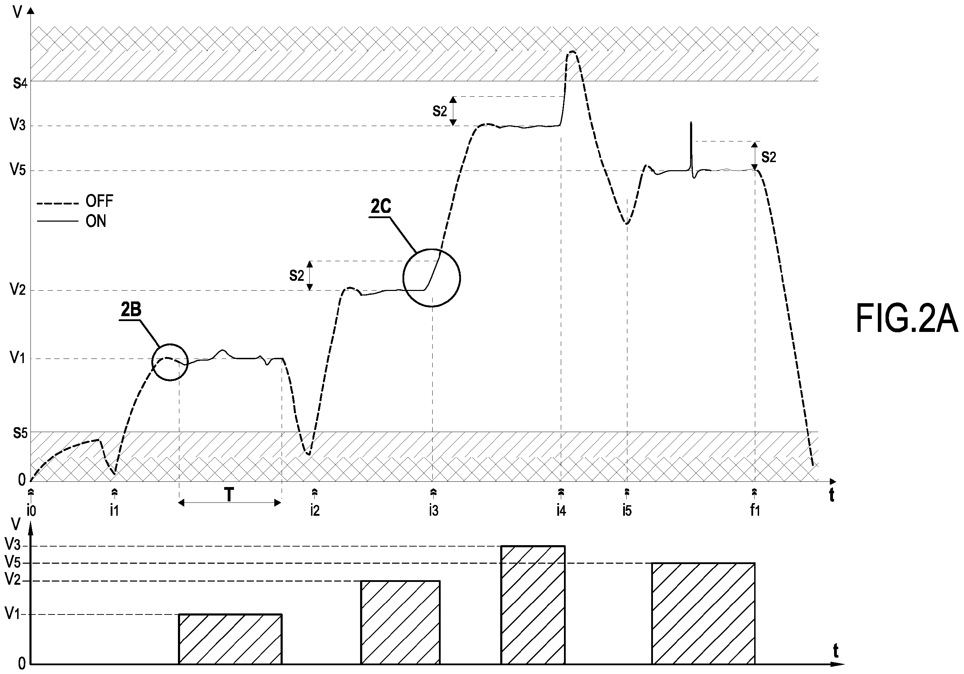

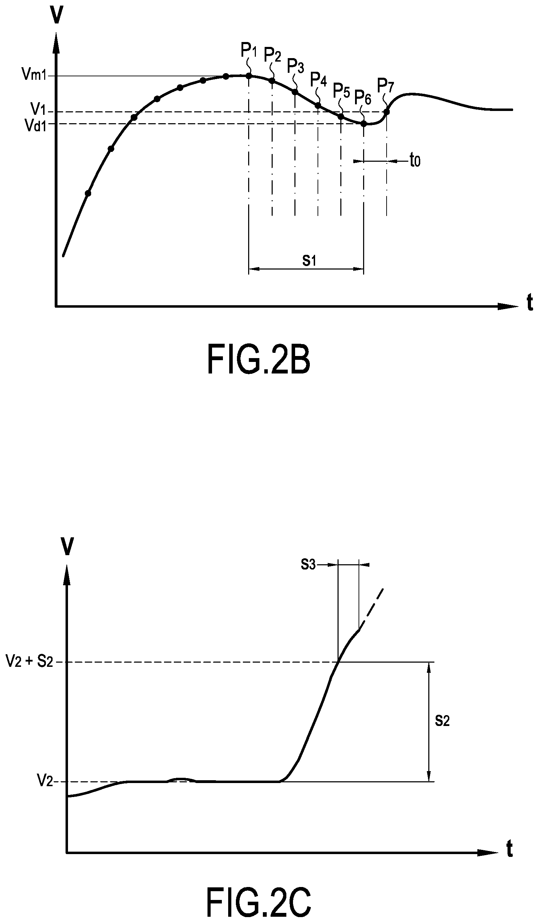

L'organe de commande **26** est configuré pour actionner le moteur **24,** et ainsi entraîner en rotation la roue avant **20** de la trottinette **10,** si certaines conditions, qui apparaîtront plus clairement à la description des figures **2A****,** **2B** et **2C****,** sont remplies.

Les figures **2A****,** **2B** et **2C** représentent schématiquement des exemples d'évolutions temporelles de la vitesse de la trottinette **10** selon la présente invention.

Plus particulièrement, les figures **2A****,** **2B** et **2C** représentent les évolutions de la vitesse de la trottinette **10,** en fonction des actions exercées par l'utilisateur de la trottinette **10,** ces actions pouvant consister en des impulsions **i0**, **i1, i2, i3, i4, i5** appliquées par l'utilisateur sur la trottinette **10,** ou un actionnement **f1** du dispositif de freinage **30.**

Les figures **2A****,** **2B** et **2C** représentent des premier **s1**, deuxième **s2**, troisième **s3,** quatrième **s4**, et cinquième **s5** seuils prédéterminés qui seront décrits plus en détail par la suite.

Dans cet exemple non limitatif, le premier seuil prédéterminé **s1** a une valeur de 200 ms ; le deuxième seuil prédéterminé **s2** a une valeur de 10 tours par minute ; le troisième seuil prédéterminé **s3** a une valeur de 200 ms ; le quatrième seuil prédéterminé **s4** a une valeur de 400 tours par minute ; le cinquième seuil prédéterminé **s5** a une valeur de 100 tours par minute.

Par ailleurs, les figures **2A****,** **2B** et **2C** représentent alternativement en traits pointillés et en traits pleins, les phases au cours desquelles la trottinette fonctionne respectivement de manière manuelle, grâce aux efforts musculaires exercés par l'utilisateur, et avec l'assistance du moteur **24** actionné par l'organe de commande **26.**

A des fins de clarté, la partie inférieure de la figure **2A** représente les périodes au cours desquelles le moteur **24** est actionné par l'organe de commande **26,** la hauteur des différents pavés étant fonction de la vitesse à laquelle la trottinette **10** est maintenue lors des différentes phases d'actionnement du moteur **24.**

De manière traditionnelle, la trottinette **10** étant initialement arrêtée, afin de la mettre en mouvement, l'utilisateur exerce une première impulsion **i0.**

Tel que représenté sur la figure **2A****,** les mesures de vitesse réalisées périodiquement par le capteur **11** toutes les **t0** ms, avec **t0** valant, par exemple et de manière non limitative, 40 ms, sont croissantes ; les moyens de détection d'accélération **26a** détectent ainsi une phase d'accélération.

La vitesse atteinte par la trottinette **10** à l'issue de cette première impulsion **i0** est inférieure au cinquième seuil prédéterminé **s5.**

L'organe de commande **26** est configuré de manière à ne pas actionner le moteur **24** lorsque la vitesse de la trottinette **10,** déterminée par le dispositif de détermination de la vitesse, est inférieure au cinquième seuil prédéterminé **s5** ; le moteur **24** n'est donc pas actionné à l'issue de cette première impulsion **i0.**

Après la détection par les moyens de détection d'accélération **26a** de l'organe de commande **26** de la phase d'accélération causée par la première impulsion **i0,** les moyens de détection de décélération **26b** détectent une phase de décélération pendant une durée inférieure au premier seuil prédéterminé **s1.**

L'organe de commande **26** est configuré de manière à actionner le moteur **24** lorsqu'une phase de décélération ayant une durée supérieure ou égale au premier seuil prédéterminé **si** a été détectée par les moyens de détection de décélération après qu'une phase d'accélération a été détectée par les moyens de détection d'accélération ; le moteur **24** n'est donc pas actionné au cours de cette phase de décélération.

L'utilisateur exerce ensuite une nouvelle impulsion **i1.**

Tel que représenté sur la figure **2A****,** à la suite de cette impulsion **i1,** les moyens de détection d'accélération détectent une accélération de la trottinette, au cours de laquelle sa vitesse, déterminée par le dispositif de détermination de la vitesse, dépasse le cinquième seuil prédéterminé **s5,** jusqu'à atteindre la vitesse **vm1,** représentée sur la figure **2B****.**

Par exemple, et de manière non limitative, les moyens de détection d'accélération détectent une phase d'accélération de la trottinette **10** lorsque les vitesses déterminées successivement par le dispositif de détermination de la vitesse, mesurées à intervalle **t0** régulier, sont croissantes.

Les moyens de détection de décélération détectent, pour leur part, une phase de décélération de la trottinette **10** lorsque les vitesses déterminées successivement par le dispositif de détermination de la vitesse, mesurées à intervalle **t0** régulier, sont décroissantes. En particulier, entre les instants **P1** à **P6** représentés sur la figure **2B****,** la vitesse de la trottinette **10** déterminée par le dispositif de détermination de vitesse est décroissante.

On pourrait bien évidemment concevoir tout autre moyen de détection d'accélération et de décélération, sans sortir du cadre de la présente invention.

Tel que représenté sur la figure **2B****,** sur laquelle une phase de décélération fait suite à une phase d'accélération détectées respectivement par les moyens de détection de décélération et les moyens de détection d'accélération, lorsque la phase de décélération détectée par les moyens de détection de décélération a une durée supérieure au premier seuil prédéterminé **s1,** l'organe de commande **26** actionne le moteur **24.**

Sur l'exemple non limitatif représenté sur la figure **2B****,** la vitesse **vm1** représente la plus grande valeur de la vitesse de la trottinette **10** déterminée par le dispositif de détermination de la vitesse, atteinte à l'instant **P1** ; l'instant **P1** correspondant à la mesure de la vitesse **vm1** correspond donc à la fois à la fin de la phase d'accélération détectée par les moyens de détection d'accélération, et au début de la phase de décélération détectée par les moyens de détection de décélération.

Tel que représenté sur la figure **2B****,** le premier seuil prédéterminé **s1** a une valeur, par exemple et de manière non limitative, de 5 intervalles **t0**, au cours desquels les vitesses sont déterminées par le dispositif de détermination de la vitesse aux instants **P2, P3, P4, P5** et **P6** ; à l'issue de la cinquième vitesse décroissante déterminée à la suite de la vitesse **vm1** par le dispositif de détermination de la vitesse à l'instant **P6,** le moteur **24** est actionné par l'organe de commande **26.**

L'instant **P7** représenté sur la figure **2B** correspond donc à la première vitesse déterminée par le dispositif de détermination de vitesse au cours de l'actionnement du moteur **24.**

Dans l'exemple représenté où 5 intervalles d'une durée de **t0** = 40 ms sont considérés pendant la phase de décélération détectée par les moyens de détection de décélération **26b,** le premier seuil prédéterminé **s1** a donc une valeur de 200 ms.

En d'autres termes, on comprend que l'organe de commande **26** du moteur **24** détecte, par ses moyens de détection d'accélération, une phase d'accélération de la trottinette **10,** suivie d'une phase de décélération de la trottinette **10,** détectée par ses moyens de détection de décélération. Lorsque la phase de décélération détectée par les moyens de détection de décélération présente une durée au moins égale au premier seuil prédéterminé **s1,** l'organe de commande **26** actionne le moteur **24.**

Tel que représenté en particulier sur la figure **2A****,** l'organe de commande **26** est configuré pour actionner le moteur **24** de manière que la vitesse de la trottinette **10** soit maintenue à une vitesse de consigne **v1,** à l'issue de l'impulsion **i1.**

Tel que représenté sur la figure **2B****,** la vitesse de consigne **v1** est fonction de la vitesse de la trottinette **10** au moment de l'actionnement du moteur **24.** Dans cet exemple, la vitesse de consigne **v1** a une valeur constante environ égale à 180 tours par minute.

Tel que cela apparaîtra plus clairement dans la suite de la description, la vitesse de consigne **v1,** à laquelle la trottinette **10** est maintenue à l'issue de l'impulsion **i1,** est supérieure à la vitesse **vd1** déterminée par le dispositif de détermination de la vitesse à l'issue de la durée **s1** de la phase de décélération détectée par les moyens de détection de décélération. Par exemple et de manière non limitative, l'organe de commande **26** applique un facteur supérieur à 1 à la vitesse **vd1,** par exemple 1.05.

On pourrait bien évidemment concevoir, et sans sortir du cadre de la présente invention, un organe de commande **26** configuré pour actionner le moteur **24** de manière que la vitesse de consigne **v1** soit égale à la vitesse **vd1** déterminée à l'issue de la durée **s1** de la phase de décélération détectée par les moyens de détection de décélération.

Alternativement, sans sortir du cadre de la présente invention, l'organe de commande **26** pourrait être configuré pour actionner le moteur **24** de manière que la vitesse de consigne **v1** soit égale à l'une des vitesses déterminées par le dispositif de détermination de la vitesse au cours de la phase de décélération, antérieurement à l'instant où la vitesse **vd1** est atteinte.

Tel que représenté sur la figure **2A****,** l'organe de commande **26** est configuré pour actionner le moteur **24** pendant une durée prédéterminée **T,** par exemple égale à 60 secondes.

Tel que cela apparaît sur la figure **2A****,** au cours de la période **T** pendant laquelle le moteur **24** est actionné, de légères variations de la vitesse de la trottinette **10** peuvent être déterminées par le dispositif de détermination de la vitesse ; l'organe de commande **26** est configuré de manière que, lorsque ces variations ne sont pas significatives, l'actionnement du moteur **24** n'est pas interrompu.

Le sens du caractère significatif des variations de vitesse de la trottinette **10** déterminées par le dispositif de détermination de la vitesse lorsque le moteur **24** est actionné apparaîtra plus clairement dans la suite de la description.

A l'issue de la durée prédéterminée **T,** l'organe de commande **26** interrompt l'actionnement du moteur **24,** entraînant ainsi une décélération de la vitesse de la trottinette **10,** liée aux forces de frottement appliquées à la trottinette **10.**

Tel que représenté sur la figure **2A****,** l'utilisateur applique alors une nouvelle impulsion **i2** ; les moyens de détection d'accélération détectent ainsi une nouvelle phase d'accélération.

Tel que représenté sur la figure **2A****,** et de manière similaire à la configuration décrite à l'observation de la figure **2B****,** l'organe de commande **26** du moteur **24** actionne le moteur **24** lorsqu'une phase de décélération d'une durée supérieure ou égale au premier seuil prédéterminé **s1** a été détectée par les moyens de détection de décélération après qu'une phase d'accélération a été détectée par les moyens de détection d'accélération.

L'organe de commande **26** actionne ainsi le moteur **24,** de manière que la vitesse de la trottinette **10** est maintenue à une vitesse de consigne **v2,** dans cet exemple supérieur à **v1,** par exemple égale à 200 tours par minute.

On constate en particulier que les vitesses de consigne **v1** et **v2,** à laquelle la vitesse de la trottinette **10** est maintenue respectivement après les impulsions **i1** et **i2,** sont différentes, dans la mesure où elles sont fonction de la vitesse de la trottinette **10** au moment de l'actionnement du moteur **24** par l'organe d'actionnement **26.**

Tel que représenté sur la figure **2A****,** une nouvelle impulsion **i3** est exercée par l'utilisateur, alors que le moteur **24** est actionné, pendant la période **T.**

Tel que représenté en particulier sur la figure **2C****,** par suite de cette impulsion **i3** exercée par l'utilisateur, les moyens de détection d'accélération détectent une nouvelle phase d'accélération, au cours de laquelle la vitesse de la trottinette **10** augmente, dépassant sensiblement la vitesse de consigne **v2.** Plus précisément, la variation positive de la vitesse de la trottinette, considérée depuis la vitesse de consigne **v2,** est supérieure au deuxième seuil prédéterminé **s2.**

Tel que cela apparaît à l'observation de la figure **2C****,** l'organe de commande **26** est configuré de manière que, lorsque la vitesse de la trottinette **10** déterminée par le dispositif de détermination de la vitesse dépasse la vitesse de consigne **v2** de plus du deuxième seuil prédéterminé **s2** pendant une durée supérieure au troisième seuil prédéterminé **s3,** l'actionnement du moteur **24** est interrompu.

En d'autres termes, l'organe de commande a détecté une nouvelle impulsion de l'utilisateur et stoppe l'actionnement du moteur.

A l'issue de la phase d'accélération détectée par les moyens de détection d'accélération causée par l'impulsion **i3,** et de manière similaire au comportement représenté à la figure **2A** à l'issue des impulsions **i1** et **i2,** les moyens de détection de décélération détectent une phase de décélération dont la durée dépasse le premier seuil prédéterminé **s1,** de sorte que l'organe d'actionnement **26** actionne le moteur **24,** permettant de maintenir la vitesse de la trottinette **10** à une vitesse de consigne **v3,** nettement supérieure à **v2.** Dans cet exemple, **v3** a une valeur d'environ 360 tours par minute.

L'utilisateur exerce une nouvelle impulsion **i4,** au cours de l'actionnement du moteur **24,** pendant la période **T.**

De manière similaire au comportement de la trottinette **10** décrit en référence à la figure **2C****,** l'organe de commande **26** interrompt l'actionnement du moteur **24** lorsque la variation positive de la vitesse de la trottinette **10,** par rapport à la vitesse de consigne **v3,** est supérieure au deuxième seuil prédéterminé **s2** pendant une durée supérieure au troisième seuil prédéterminé **s3.**

Tel que représenté sur la figure **2A****,** à l'issue de la phase d'accélération détectée par les moyens de détection d'accélération et causée par l'impulsion **i4,** la vitesse de la trottinette **10** déterminée par le dispositif de détermination de la vitesse est supérieure au quatrième seuil **s4,** qui dans cet exemple est égal à 400 tours par minute.

Par mesure de sécurité, l'organe de commande **26** est configuré pour ne pas actionner le moteur **24** lorsque la vitesse de la trottinette **10** déterminée par le dispositif de détermination est supérieure au quatrième seuil **s4.**

Par suite, le moteur **24** n'est donc pas actionné ; les moyens de détection de décélération détectent alors une phase de décélération au cours de laquelle la vitesse de la trottinette **10** décroît, jusqu'à ce que l'utilisateur exerce une nouvelle impulsion **i5,** tel que représenté sur la figure **2A****.**

De manière similaire au comportement décrit précédemment, une phase de décélération d'une durée supérieure au premier seuil prédéterminé **s1** étant détectée par les moyens de détection de décélération après qu'une phase d'accélération a été détectée par les moyens de détection d'accélération, à l'issue de l'impulsion **i5,** l'organe de commande **26** actionne le moteur **24.**

Le moteur **24** est alors actionné par l'organe de commande **26** de manière que la vitesse de la trottinette **10** est maintenue à une vitesse de consigne **v5** à l'issue de l'impulsion **i5,** la vitesse de consigne **v5** étant, de manière similaire aux autres phases d'actionnement du moteur **24** décrites précédemment, fonction de la vitesse de la trottinette **10** déterminée par le dispositif de détermination de la vitesse lors de l'actionnement du moteur **24.** Dans cet exemple non limitatif, la vitesse de consigne **v5** est légèrement supérieure à la vitesse déterminée à l'issue de la phase de décélération ; elle vaut par exemple 330 tours par minute.

Tel que représenté sur la figure **2A****,** au cours de l'actionnement du moteur **24** grâce auquel la vitesse de la trottinette **10** est maintenue à la vitesse de consigne **v5,** une variation positive brève de la vitesse de la trottinette **10** est déterminée par le dispositif de détermination de la vitesse ; au contraire du comportement décrit en référence à la figure **2**C, la variation positive de la vitesse de la trottinette **10** n'est pas supérieure au deuxième seuil prédéterminé **s2** pendant une durée supérieure au troisième seuil prédéterminé **s3.**

Tel que décrit précédemment, l'organe de commande **26** étant configuré de manière à stopper l'actionnement du moteur **24** lorsque la variation positive de la vitesse de la trottinette **10** est supérieure au deuxième seuil prédéterminé **s2** pendant une durée supérieure à un troisième seuil prédéterminé **s3,** l'actionnement du moteur **24** n'est pas stoppé par l'organe de commande **26** lorsque le dispositif de détermination de la vitesse détecte ladite variation positive brève de la vitesse de la trottinette **10.**

En d'autres termes, la variation de la vitesse de la trottinette **10** représentée sur la figure **2A** au cours de l'actionnement du moteur **24** suivant l'impulsion **i5** étant de nature accidentelle, et non provoquée par une nouvelle impulsion exercée par l'utilisateur, l'organe de commande **26** n'interrompt pas l'actionnement du moteur **24.**

Pour qu'une variation de la vitesse de la trottinette **10** déterminée par le dispositif de détermination de la vitesse soit considérée comme significative par l'organe de commande **26** et qu'elle entraîne, à ce titre, l'interruption de l'actionnement du moteur **24,** il faut donc, d'une part, qu'elle soit supérieure à la vitesse de consigne correspondante d'une valeur au moins égale au deuxième seuil prédéterminé **s2,** et que, d'autre part, le dépassement du deuxième seuil prédéterminé **s2** soit déterminé par le dispositif de détermination de la vitesse pendant une durée supérieure au troisième seuil prédéterminé **s3.**

Après cette accélération accidentelle, et tel que représenté par la référence **f1** sur la figure **2A****,** le dispositif de freinage **30** est actionné par l'utilisateur.

L'organe de commande **26** est configuré pour stopper l'actionnement du moteur **24** lorsque le dispositif de freinage **30** est actionné par l'utilisateur.

Par suite, les moyens de détection de décélération détectent une nouvelle phase de décélération au cours de laquelle la vitesse de la trottinette **10** décroît jusqu'à être inférieure au cinquième seuil prédéterminé **s5.**

L'organe de commande **26** de la trottinette **10** selon la présente invention peut également comporter un dispositif de paramétrage configuré pour permettre à l'utilisateur de modifier la valeur des seuils prédéterminés **s1, s2, s3, s4** et **s5.**

La durée de la période **t0** de détermination des vitesses de la trottinette **10** par le dispositif de détermination de la vitesse peut également, sans sortir du cadre de la présente invention, être modifiée par le dispositif de paramétrage.

On pourrait également concevoir un organe de commande **26** configuré pour actionner le moteur **24,** lorsque les conditions décrites ci-dessus sont remplies, de manière illimitée.

Tel que décrit en référence aux figures **1****,** **2A****,** **2B** et **2C****,** la trottinette **10** selon la présente invention est donc configurée pour mettre en oeuvre un procédé d'assistance motorisée comprenant :
- une étape de détection d'une phase d'accélération de la trottinette ;
- une étape de détection d'une phase de décélération de la trottinette ;
- une étape de mesure de la durée de la phase de décélération ; et
- une étape d'actionnement du moteur **24** lorsque la phase de décélération a une durée au moins égale au premier seuil prédéterminé **s1.**

Le procédé d'assistance motorisée comprend également une étape consistant à détecter une nouvelle phase d'accélération lors de l'étape d'actionnement du moteur, et une étape consistant à stopper l'actionnement du moteur.

Par ailleurs, le procédé d'assistance motorisée mis en oeuvre par la trottinette **10** selon la présente invention comprend également :
- une étape consistant à détecter une variation positive de la vitesse de la trottinette supérieure au deuxième seuil prédéterminé **s2** au cours de l'actionnement du moteur ;
- une étape consistant à mesurer la durée pendant laquelle la variation positive de la vitesse de la trottinette est supérieure au deuxième seuil prédéterminé **s2** ; et
- une étape consistant à stopper l'actionnement du moteur **24** lorsque la variation positive de la vitesse de la trottinette est supérieure au deuxième seuil prédéterminé **s2** pendant une durée supérieure au troisième seuil prédéterminé **s3.**

Enfin, le procédé d'assistance motorisée comprend également une étape consistant à détecter un éventuel actionnement du dispositif de freinage **30** alors que le moteur est actionné, et une étape consistant à stopper l'actionnement du moteur, en cas de détection de l'actionnement du dispositif de freinage.

La description ci-dessus est donnée à titre d'exemple, et n'est donc pas limitative de l'invention.

## Revendications

1. Trottinette (10) comportant :
- un cadre (12) ;
- une roue avant (20) et une roue arrière (22) fixées au cadre ;
- un moteur (24) configuré pour entraîner en rotation au moins l'une des roues avant et arrière ;
- un organe de commande (26) du moteur ; dans laquelle l'organe de commande du moteur comporte:
- des moyens de détection d'accélération (26a) pour détecter une phase d'accélération de la trottinette ;
- des moyens de détection de décélération (26b) pour détecter une phase de décélération de la trottinette ; **caractérisée en ce que**
- l'organe de commande est configuré pour actionner le moteur lorsqu'une phase de décélération ayant une durée au moins égale à un premier seuil prédéterminé (s1) a été détectée par les moyens de détection de décélération après qu'une phase d'accélération a été détectée par les moyens de détection d'accélération.

2. Trottinette (10) selon la revendication 1, **caractérisée en ce que** l'organe de commande (26) est configuré pour actionner le moteur (24) après détection de ladite phase de décélération de sorte que la vitesse de la trottinette soit maintenue à une vitesse de consigne (v1, v2, v3, v5).

3. Trottinette (10) selon la revendication **2, caractérisée en ce que** la vitesse de consigne (v1) est fonction de la vitesse (vd1) de la trottinette au moment de l'actionnement du moteur.

4. Trottinette (10) selon la revendication **2** ou **3, caractérisée en ce que** l'organe de commande (26) est configuré pour déterminer une vitesse (vd1) en fin de ladite phase de décélération, et **en ce que** l'organe de commande est configuré pour actionner le moteur après détection de ladite phase de décélération de sorte que la vitesse (v1) de la trottinette soit supérieure à la vitesse déterminée en fin de ladite phase de décélération.

5. Trottinette (10) selon l'une quelconque des revendications **1 à 4, caractérisée en ce que** l'organe de commande (26) est configuré pour actionner le moteur pendant une durée prédéterminée (T).

6. Trottinette (10) selon l'une quelconque des revendications **1 à 5, caractérisée en ce que** l'organe de commande est configuré pour stopper l'actionnement du moteur lorsqu'une nouvelle phase d'accélération est détectée alors que le moteur est actionné.

7. Trottinette (10) selon la revendication **6, caractérisée en ce que** l'organe de commande est configuré pour actionner à nouveau le moteur lorsqu'une nouvelle phase de décélération ayant une durée au moins égale au premier seuil prédéterminé (s1) a été détectée par les moyens de détection de décélération après la nouvelle phase d'accélération.

8. Trottinette (10) selon l'une quelconque des revendications **1 à 7, caractérisée en ce que** la trottinette comporte en outre un dispositif de détermination de la vitesse de la trottinette, et **en ce que** l'organe de commande est configuré pour stopper l'actionnement du moteur lorsqu'une variation positive de la vitesse de la trottinette supérieure à un deuxième seuil prédéterminé (s2) est détectée.

9. Trottinette (10) selon la revendication **8, caractérisée en ce que** l'organe de commande est configuré pour stopper l'actionnement du moteur lorsque la variation positive de la vitesse de la trottinette est supérieure au deuxième seuil prédéterminé (s2) pendant une durée supérieure à un troisième seuil prédéterminé (s3).

10. Trottinette (10) selon l'une quelconque des revendications **1 à 9, caractérisée en ce qu'**elle comporte en outre un dispositif de freinage (30), et **en ce que** l'organe de commande est configuré pour stopper l'actionnement du moteur lorsque le dispositif de freinage est actionné.

## Patentansprüche

1. Roller (10), umfassend:
- einen Rahmen (12),
- ein Vorderrad (20) und ein Hinterrad (22), die am Rahmen befestigt sind,
- einen Motor (24), der ausgelegt ist, mindestens eines von dem Vorder- und dem Hinterrad in Drehung zu versetzen,
- ein Steuerelement (26) des Motors,
wobei das Steuerorgan des Motors umfasst:
- Beschleunigungsdetektionsmittel (26a) zum Detektieren einer Beschleunigungsphase des Rollers,
- Verlangsamungsdetektionsmittel (26b) zum Detektieren einer Verlangsamungsphase des Rollers,
**dadurch gekennzeichnet, dass**
- das Steuerorgan ausgelegt ist, den Motor zu betätigen, wenn eine Verlangsamungsphase mit einer Dauer mindestens gleich einer ersten vorherbestimmten Schwelle (s1) von den Verlangsamungsdetektionsmitteln detektiert wurde, nachdem eine Beschleunigungsphase von den Beschleunigungsdetektionsmitteln detektiert wurde.

2. Roller (10) nach Anspruch 1, **dadurch gekennzeichnet, dass** das Steuerorgan (26) ausgelegt ist, den Motor (24) nach der Detektion der Verlangsamungsphase derart zu betätigen, dass die Geschwindigkeit des Rollers auf einer Sollgeschwindigkeit (v1, v2, v3, v5) gehalten wird.

3. Roller (10) nach Anspruch 2, **dadurch gekennzeichnet, dass** die Sollgeschwindigkeit (v1) eine Funktion der Geschwindigkeit (vd1) des Rollers im Moment der Betätigung des Motors ist.

4. Roller (10) nach Anspruch 2 oder 3, **dadurch gekennzeichnet, dass** das Steuerorgan (26) ausgelegt ist, eine Geschwindigkeit (vd1) am Ende der Verlangsamungsphase zu bestimmen, und dadurch, dass das Steuerorgan ausgelegt ist, den Motor nach der Detektion der Verlangsamungsphase derart zu betätigen, dass die Geschwindigkeit (v1) des Rollers größer ist als die am Ende der Verlangsamungsphase bestimmte Geschwindigkeit.

5. Roller (10) nach einem der Ansprüche 1 bis 4, **dadurch gekennzeichnet, dass** das Steuerorgan (26) ausgelegt ist, den Motor während einer vorherbestimmten Dauer (T) zu betätigen.

6. Roller (10) nach einem der Ansprüche 1 bis 5, **dadurch gekennzeichnet, dass** das Steuerorgan ausgelegt ist, die Betätigung des Motors zu stoppen, wenn eine neue Beschleunigungsphase detektiert wird, während der Motor betätigt wird.

7. Roller (10) nach Anspruch 6, **dadurch gekennzeichnet, dass** das Steuerorgan ausgelegt ist, den Motor erneut zu betätigen, wenn eine neue Verlangsamungsphase mit einer Dauer mindestens gleich der ersten vorherbestimmten Schwelle (s1) von den Verlangsamungsdetektionsmitteln nach der neuen Phase der Beschleunigung detektiert wurde.

8. Roller (10) nach einem der Ansprüche 1 bis 7, **dadurch gekennzeichnet, dass** der Roller außerdem eine Vorrichtung zur Bestimmung der Geschwindigkeit des Rollers umfasst, und dadurch, dass das Steuerorgan ausgelegt ist, die Betätigung des Motors zu stoppen, wenn eine positive Variation der Geschwindigkeit des Rollers detektiert wird, die größer ist als eine zweite vorherbestimmte Schwelle (s2).

9. Roller (10) nach Anspruch 8, **dadurch gekennzeichnet, dass** das Steuerorgan ausgelegt ist, die Betätigung des Motors zu stoppen, wenn die positive Variation der Geschwindigkeit des Rollers größer als die zweite vorherbestimmte Schwelle (s2) während einer Dauer ist, die größer ist als eine dritte vorherbestimmte Schwelle (s3).

10. Roller (10) nach einem der Ansprüche 1 bis 9, **dadurch gekennzeichnet, dass** dieser außerdem eine Bremsvorrichtung (30) umfasst, und dadurch, dass das Steuerorgan ausgelegt ist, die Betätigung des Motors zu stoppen, wenn die Bremsvorrichtung betätigt wird.

## Claims

1. Scooter (10) including:
- a frame (12);
- a front wheel (20) and a rear wheel (22) attached to the frame;
- a motor (24) configured for driving into a rotation at least one of the front and rear wheels;
- a motor control unit (26);
wherein the motor control unit includes:
- acceleration detection means (26a) for detecting an acceleration phase of the scooter;
- deceleration detection means (26b) for detecting a deceleration phase of the scooter;
**characterized in that** the control unit is configured for actuating the motor when a deceleration phase having a period at least equal to a first predetermined threshold (s1) has been detected by the deceleration detection means after detection of an acceleration phase by the acceleration detection means.

2. Scooter (10) according to claim 1, **characterized in that** the control unit (26) is configured for actuating the motor (24) after detection of said deceleration phase so that the speed of the scooter is maintained at a set speed value (v1, v2, v3, v5).

3. Scooter (10) according to claim 2, **characterized in that** said speed value (v1) depends on the speed (vd1) of the scooter upon actuation of the motor.

4. Scooter (10) according to claim 2 or 3, **characterized in that** the control unit (26) is configured for determining a speed (vd1) at the end of said deceleration phase, and **in that** the control unit is configured for actuating the motor after detection of said deceleration phase so that the speed (v1) of the scooter is greater than the speed determined at the end of said deceleration phase.

5. Scooter (10) according to any of claims 1 to 4, **characterized in that** the control unit (26) is configured for actuating the motor for a predetermined period (T).

6. Scooter (10) according to any of claims 1 to 5, **characterized in that** the control unit is configured for stopping the actuation of the motor when a new acceleration phase is detected while the motor is actuated.

7. Scooter (10) according to claim 6, **characterized in that** the control unit is configured for again actuating the motor when a new deceleration phase having a period at least equal to the first predetermined threshold (s1) has been detected by the deceleration detection means after the new acceleration phase.

8. Scooter (10) according to any of claims 1 to 7, **characterized in that** the scooter further includes a device for determining the speed of the scooter, and **in that** the control unit is configured for stopping the actuation of the motor when a positive variation in the speed of the scooter greater than a second predetermined threshold (s2) is detected.

9. Scooter (10) according to claim 8, **characterized in that** the control unit is configured for stopping the actuation of the motor when the positive variation of the speed of the scooter is greater than the second predetermined threshold (s2) for a period greater than a third predetermined threshold (s3).

10. Scooter (10) according to any of claims 1 to 9, **characterized in that** it further includes a braking device (30), and **in that** the control unit is configured for stopping the actuation of the motor when the braking device is actuated.
